# EUROPEAN PATENT APPLICATION

(11) **EP 4 791 106 A1**
(43) Date of publication of application: **12.08.2026**
(21) Application number: 25156698.0
(22) Date of filing: 07.02.2025
(51) Int. Cl.: H04W 74/00, H04W 68/00, H04W 74/0833, H04W 52/02

(54) **METHOD, APPARATUS AND COMPUTER PROGRAM**

(71) Applicant: Nokia Technologies Oy, 02610 Espoo (FI)
(72) Inventor: KAINULAINEN, Jani-Pekka, Cambridgeshire, CB24 8BA (GB); KOSKINEN, Jussi-Pekka, 90420 Oulu (FI); DALSGAARD, Lars, 90230 Oulu (FI); KAIKKONEN, Jorma, 90800 Oulu (FI)
(74) Representative: Page White Farrer

(57) **Abstract**

There is provided an apparatus, method, and computer program for causing an apparatus to perform: deriving a threshold configuration, wherein the threshold configuration comprises at least one respective threshold for at least one of at least one first frequency or at least one second frequency, wherein the at least one second frequency is different to the at least one first frequency; receiving first signalling on the at least one first frequency wherein the first signalling indicates whether a random access procedure is to be performed on the at least one second frequency; determining the at least one second frequency; determining, based on the first signalling and the threshold configuration, whether to perform a random access procedure on the at least one second frequency; and performing the random access procedure in accordance with said determining.

## Description

### TECHNICAL FIELD

Various example embodiments of this disclosure relate to a method, apparatus, system and computer program for selecting frequency band for performing a random access procedure.

### BACKGROUND

A communication network can be seen as a facility that enables communications between two or more communication devices, or provides communication devices access to a data network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards are the so-called 5G (5th Generation) standards and 6G (6th Generation) standards provided by 3GPP.

### SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to a first aspect, there is provided an apparatus comprising means for: deriving a threshold configuration, wherein the threshold configuration comprises at least one respective threshold for at least one of at least one first frequency or at least one second frequency, wherein the at least one second frequency is different to the at least one first frequency; receiving first signalling on the at least one first frequency wherein the first signalling indicates whether a random access procedure is to be performed on the at least one second frequency; determining the at least one second frequency; determining, based on the first signalling and the threshold configuration, whether to perform a random access procedure on the at least one second frequency; and performing the random access procedure in accordance with said determining.

According to a second aspect, there is provided an apparatus comprising: at least one processor; and at least one memory comprising code that, when executed by the at leat one processor, causes the apparatus to perform: deriving a threshold configuration, wherein the threshold configuration comprises at least one respective threshold for at least one of at least one first frequency or at least one second frequency, wherein the at least one second frequency is different to the at least one first frequency; receiving first signalling on the at least one first frequency wherein the first signalling indicates whether a random access procedure is to be performed on the at least one second frequency; determining the at least one second frequency; determining, based on the first signalling and the threshold configuration, whether to perform a random access procedure on the at least one second frequency; and performing the random access procedure in accordance with said determining.

According to a third aspect, there is provided a method for an apparatus, the method comprising: deriving a threshold configuration, wherein the threshold configuration comprises at least one respective threshold for at least one of at least one first frequency or at least one second frequency, wherein the at least one second frequency is different to the at least one first frequency; receiving first signalling on the at least one first frequency wherein the first signalling indicates whether a random access procedure is to be performed on the at least one second frequency; determining the at least one second frequency; determining, based on the first signalling and the threshold configuration, whether to perform a random access procedure on the at least one second frequency; and performing the random access procedure in accordance with said determining.

According to a fourth aspect, there is provided an apparatus comprising: deriving circuitry for deriving a threshold configuration, wherein the threshold configuration comprises at least one respective threshold for at least one of at least one first frequency or at least one second frequency, wherein the at least one second frequency is different to the at least one first frequency; receiving circuitry for receiving first signalling on the at least one first frequency wherein the first signalling indicates whether a random access procedure is to be performed on the at least one second frequency; determining circuitry for determining the at least one second frequency; determining circuitry for determining, based on the first signalling and the threshold configuration, whether to perform a random access procedure on the at least one second frequency; and performing circuitry for performing the random access procedure in accordance with said determining.

The following may apply in respect of any (e.g., one or more, including all) of the above first to fourth examples.

The first signaling may comprise a low power wake-up signal (LP-WUS) associated with a sub-group of user equipments, and a configuration of the sub-group may comprise at least one of an indication indicating whether a paging message is on the different frequency, an indication indicating whether the random access procedure is on the different frequency, or an indication of the different frequency, and wherein the apparatus may be caused to perform: obtaining the configuration of the sub-group.

The apparatus may be caused to perform: determining the sub-group associated with the received LP-WUS; determining, based on the configuration of the sub-group, whether to receive the paging message on the at least one second frequency; and receiving the paging message in accordance with said determining.

The first signaling may comprise a paging message.

The paging message may comprise an indication of the at least one second frequency.

The apparatus may be caused to perform: determining, based on the first signalling, whether to send a paging response on the at least one second frequency; and sending a paging response on the at least one second frequency in accordance with said determining whether to send a paging response on the at least one second frequency.

The at least one first frequency may comprise at least one of a carrier frequency, a frequency band, or a cell bandwidth.

The at least one second frequency may comprise at least one of a second carrier frequency, a at least one second frequency band, or a second cell bandwidth.

The determining, based on the first signalling and the threshold configuration, whether to perform a random access procedure using the at least one second frequency may comprise: obtaining a first threshold value from the threshold configuration; performing at least one measurement to obtain a first quality metric associated with the at least one first frequency; and selecting either the at least one first frequency or the at least one second frequency based on whether the first quality metric meets or exceeds the first threshold value.

The determining, based on the first signalling and the threshold configuration, whether to perform a random access procedure using the at least one second frequency, may comprise: obtaining a second threshold value from the threshold configuration; performing at least one measurement to obtain a second quality metric associated with the at least one second frequency; and selecting either the at least one first frequency or the at least one second frequency based on whether the second quality metric meets or exceeds the second frequency threshold value.

The first threshold value may comprise at least one of a transmission power, a reference signal receive power, or a received signal strength indicator.

The first threshold value may comprise at least one of a threshold for using a first receiver, a threshold for not using the first receiver, a threshold for using a second receiver, a threshold for not using the second receiver, a value between the threshold for using the first receiver and the threshold for using the second receiver, or a value between the threshold for not using the second receiver and the threshold for not using the second receiver.

The apparatus may be caused to perform the selecting either the at least one first frequency or the at least one second frequency based on whether the obtained quality metric meets or exceeds the first threshold value only when both the first signalling indicates the first identifier and a received paging message comprises a user equipment identifier associated with the apparatus.

The selecting may be performed before a paging message that identifies the apparatus is received on the least one first frequency, or wherein the selecting is performed after a paging message that identifies the apparatus is received.

The first signalling may comprise at least one of a low power wake-up signal or a paging message.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Some example embodiments will now be described, by way of non-limiting and illustrative example only, with reference to the accompanying Figures in which:
Figures 1A and 1B shows a representation of a communication system;
Figure 2 shows a representation of an apparatus for the communication system of Figures 1A and 1B according to some example embodiments;
Figures 3A to 3B show representations of an apparatus according to some example embodiments;
Figure 4 illustrates example signaling on different frequencies;
Figure 5 illustrates example signaling between apparatus; and
Figures 6 to 8 illustrate methods that may be performed by apparatus described herein.

### DETAILED DESCRIPTION

In general, the following relates methods for efficiently controlling the operation of a user equipment (UE) that comprises a low power radio or low power receiver (LR) and a main radio or main receiver (MR). The LR may be used by the UE in a reduced power mode. The LR architecture in the UE may be deployed independently of the UE's MR components, or by reusing the MR but reducing or turning off certain functionalities of the MR components. To this effect, the functionalities of the MR may simply be labelled as a "first receiver" and the functionalities of the LR may be simply labelled as a "second receiver". In particular, the following relates to selecting one or more frequency bands for performing a random access procedure (and potentially at least part of a paging procedure) based on a low power wake-up signal (LP-WUS) or a paging message received by the UE on at least one frequency supported by the LR.

Although these concepts will be illustrated more fully below, the following provides an example of a communication environment in which the presently described techniques may be deployed. It is understood that this communication environment is not limiting, and is merely being used to provide at least one example for describing where such techniques may be deployed.

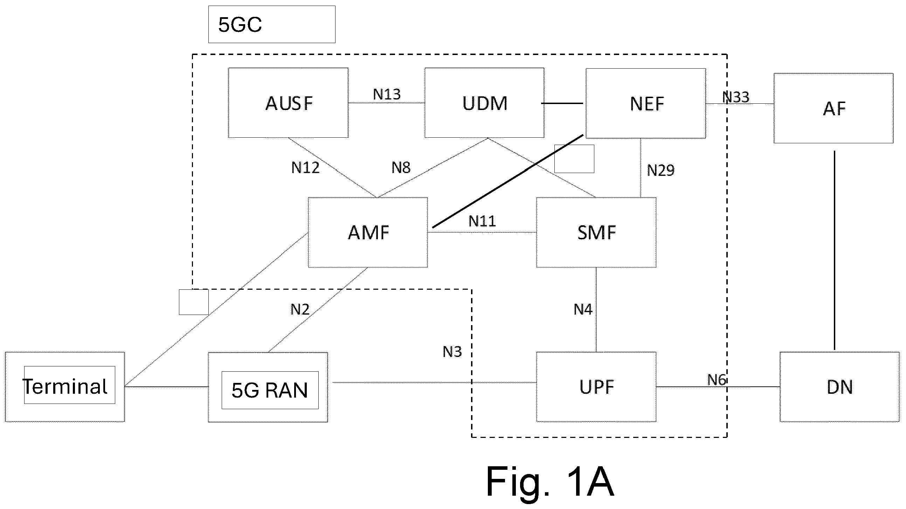

Stated differently, in the following various example embodiments are explained with reference to communication devices capable of communication with a communication system. Before explaining in detail the embodiments of the methods and apparatuses of the present disclosure, a 5^{th} generation communication system (5GS), an access network and a core network (5GC) thereof, and communication devices are briefly explained with reference to Figures 1A, 1B, 2 and 3A.

Figure 1A shows a schematic representation of a 5G communication system (5GS). The 5GS may comprise a user equipment (UE), an access network such as a 5G radio access network (5G-RAN) or next generation radio access network (NG-RAN), a 5G core network (5GC), and one or more application functions. An application function may be deployed in the 5GS as trusted application function or may be deployed or host on one or more application servers of the data network. Such application functions are untrusted application functions. The 5GS connects the UE to a data network the access network and the 5GC (e.g., a UPF of the 5GC).

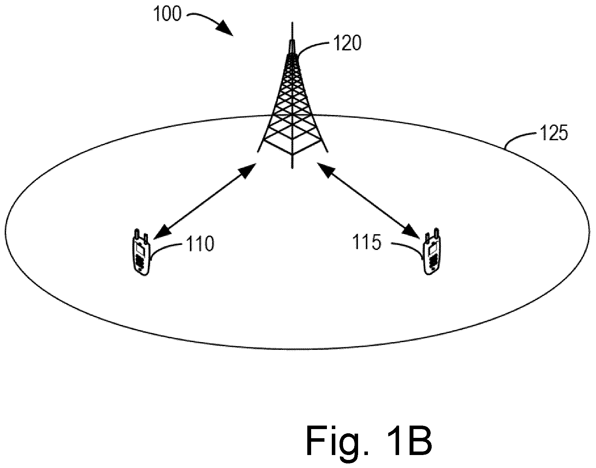

The 5G-RAN may comprise one or more radio access nodes, such as gNodeB (gNB). A gNB may include one or more gNodeB distributed units connected to one or more gNodeB centralized units. The 5G-RAN may be as illustrated below in Figure 1B.

The 5GC may comprise the following network functions: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF), and a user plane function (UPF). Figure 1A also shows the various interfaces (N1, N2 etc.) that may be implemented between the various elements of the system.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a data consumer electronics device, a device operating on commercial and/or industrial wireless networks, and the like. The terminal device may also correspond to a Mobile Termination (MT) part of an Integrated Access and Backhaul (IAB) node (e.g., a relay node). In the following description, the terms "terminal device", "communication device", "terminal", "user device", "user equipment" and "UE" may be used interchangeably.

As used herein, the term "network device" is used interchangeably with "network access node", and refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

In some example embodiments, a link from the network device 120 to the user device 110 or 115 is referred to as a DL, while a link from the user device 110 or 115 to the network device 120 is referred to as a UL. Links are also referred to herein as "channels". In DL, the network device 120 is a Tx device (or a transmitter), and the user device 110 or 115 is a Rx device (or a receiver). In UL, the user device 110 or 115 is a Tx device (or a transmitter), and the network device 120 is a Rx device (or a receiver). A link between the user device 110 and another user device (not shown) is referred to as a sidelink (SL). In SL, one of the user devices is a Tx device (or a transmitter), and the other of the user devices is a Rx device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

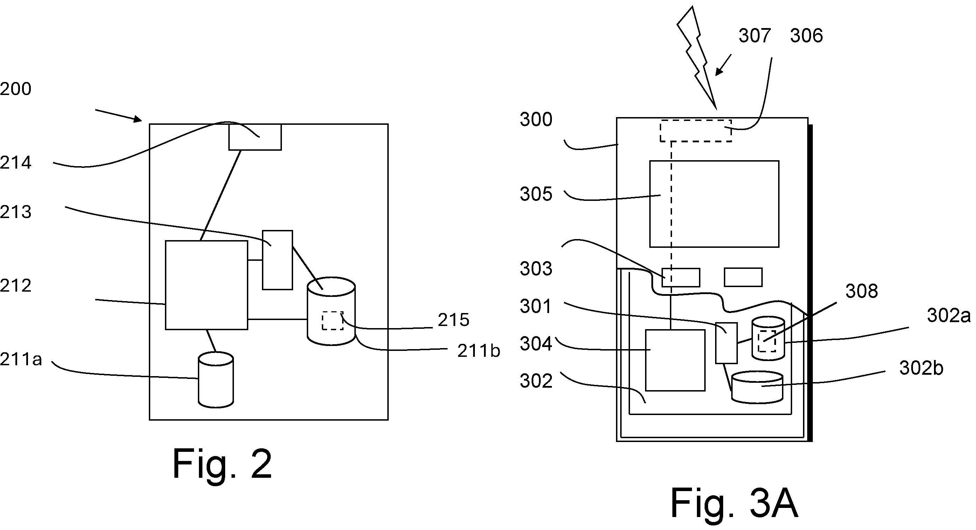

Figure 2 illustrates an example of a control apparatus 200 for controlling a function of the access network (e.g., a 5G-RAN or the NG-RAN illustrated in Figures 1A and 1B) illustrated on Figures 1A and 1B. The control apparatus 200 may comprise at least one random access memory (RAM) 211a, at least on read only memory (ROM) 211b, at least one processor 212, 213 and a network interface 214. The at least one processor 212, 213 may be coupled to the RAM 211a and the ROM 211b. The at least one processor 212, 213 may be configured to execute an appropriate software code 215. Execution of the software code 215 may for example may cause the apparatus to perform operations for controlling a function of the access network. The software code 215 may be stored in the ROM 211b. The control apparatus 200 may be interconnected with another control apparatus 200 for controlling another function of the 5G-RAN or the NG-RAN. In some embodiments, each function of the 5G-RAN or the NG-RAN is deployed or hosted on a control apparatus 200. In alternative embodiments, two or more functions of the 5G-RAN or the NG-RAN may share a control apparatus.

Figure 3A illustrates an example of a communication device 300, such as the UE illustrated on Figures 1A and 1B. The communication device 300 may be provided by any device capable of sending and receiving radio signals. Non-limiting examples of a communication device 300 comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 300 may comprise a transceiver for transmitting and/or receiving, for example, wireless signals carrying communications, for example radio signals. The communications may be one or more of voice, electronic mail (email), text messages, multimedia data, machine data and so on.

The communication device 300 may receive wireless signals (e.g., radio signals) over an air or radio interface 307 via appropriate apparatus for receiving and may transmit wireless signals via appropriate apparatus for transmitting radio signals. In Figure 3A, the transceiver is designated schematically by block 306. The transceiver 306 may comprise, for example, a radio part and associated antenna arrangement. The antenna arrangement may be arranged internally or externally to the mobile device and may comprise one or more antenna elements. The antenna arrangement may be a multi-input multi-output (MIMO) antenna.

The communication device 300 may be provided with at least one processor 301, memory 302 comprising at least one memory ROM 302a, at least one RAM 302b and other possible components 303 for use in software and hardware aided execution of tasks it is designed to perform, including control of access to and communications with access networks (e.g., the 5G-RAN or NG-RAN illustrated in Figures 1A and 1B) and other communication devices. The at least one processor 301 is coupled to the RAM 302b and the ROM 302a. The at least one processor 301 may be configured to execute an appropriate software code 308. The software code 308 may for example allow to perform one or more operations of the communication device. The software code 308 may be stored in the ROM 302a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 304. The communication device 300 may optionally have a user interface such as keypad 305, touch sensitive screen or pad, combinations thereof or the like. Optionally one or more of a display, a speaker and a microphone may be provided depending on the type of communication device.

A UE, such as described in connection with Figure 3A, may be configured to operate in different radio resource control (RRC) modes for power saving purposes. RRC is a protocol level that is used for controlling radio resources, and managing the connection establishment, maintenance, and release procedures between a UE and an access network node (such as, for example, a gNB). A UE may be configured to operate in at least one of an RRC connected mode, an RRC idle mode, and an RRC inactive mode, with the RRC idle mode and RRC inactive modes consuming less power than the RRC connected mode. The RRC idle mode and the RRC inactive mode may be alternatively referred to as "reduced energy modes", as a UE operating in any one of those modes will consume less energy than a UE that is operating in an RRC connected mode.

When the UE is in one of the RRC idle modes of RRC inactive modes, the UE is configured to abstain from monitoring for incoming signals in accordance with the configuration of that mode. For example, the UE may be configured to perform discontinuous reception (DRX), in which the UE is provided with information indicating when the UE should monitor for one or more incoming signals, and when the UE should power down one or more receivers of the UE for abstaining from monitoring for incoming signals. When the timing for the monitoring signals repeats, the overall pattern of this monitoring cycle is known as a discontinuous deception (DRX) cycle.

In more detail, DRX refers to a process in which a UE periodically enters and exits a sleep mode at specific times, where the UE does not monitor the Physical Downlink Control Channel (PDCCH) when it has entered a sleep mode and the UE does monitor the PDCCH when the UE exits the sleep mode.

DRX can be performed in the RRC connected mode and the RRC idle mode.

Even when the UE is in an RRC idle mode or an RRC inactive mode, the UE may still be contacted by the network by way of a paging procedure.

A network may initiate the paging procedure by transmitting a paging message at the UE's paging occasion. The network may address multiple UEs within a paging message by including one PagingRecord for each UE.

For example, while a UE is in an RRC idle mode and/or an RRC inactive mode, the UE may monitor that paging channels for a paging message initiated by a core network function and/or initiated by a radio access network node.

A UE does not need to continuously monitor paging channels for receiving a paging signal. Instead, a UE may be configured to monitor paging channels during a predetermined number of "paging occasions" per discontinuous reception (DRX) cycle. For example, a UE may be configured to monitor a single paging occasions per DRX cycle. Each paging occasion comprises a plurality of monitoring occasions, with each monitoring occasions corresponding to a synchronization signal block (SSB). Information defining the DRX cycles may be provided via at least one of system information (e.g., in a system information block (SIB)), non-access stratum (NAS) signaling, or radio resource control signaling.

For idle mode DRX (IDRX), a UE measures a Synchronization Signal Block(s) (SSBs) for Physical Downlink Shared Channel (PDSCH) and Physical Downlink Common Control Channel (PDCCH) reception in every paging occasion of an IDRX cycle. Physical downlink shared channel (PDSCH) decoding by the UE is very sensitive to time-frequency synchronization errors, and so the UE may use multiple synchronisation signal block (SSB) measurements before every paging occasion in order to become synchronised with the access network node for receiving a paging signal.

The main steps of a UE receiving a paging message (according to current schemes) may be as follows:
- The UE processes an SSB for synchronization before a paging occasion
- During the paging occasions, the UE monitors for a specific identifier scrambled PDCCH (e.g., a physical radio network temporary identifier (P-RNTI)), and when received, decodes the PDCCH to identify a PDSCH;
- The UE decodes the identified PDSCH to obtain a paging message; and
- The UE determines whether the paging message comprises information indicating that the paging message is for the UE.

3GPP has also defined further energy saving mechanisms for the paging mechanism. In particular, in order to reduce UE power consumption due to false paging alarms, a group of UEs that monitor the same paging occasion can be further divided into multiple sub-groups. Under this scheme, a UE first receives a paging early indicator (PEI) (also referred to as an "Early Paging Indication" or "EPI") and, when the PEI indicates that the UE will receive a subsequent paging message, the UE monitors a paging occasion to receive the paging message. When the PEI indicates that the UE will not receive a subsequent paging message, the UE may maintain its low power consumption or sleep mode.

The PEI scheme has also introduced a concept known as "sub-grouping" in order to reduce the likelihood of false paging alarms causing a UE to wakeup. Under this scheme, the PEI comprises sub-grouping information that divides up UEs that share a same paging occasion into sub-groups. Stated differently, sub-grouping enables dividing the UEs of one PO in N sub-groups in order to minimize the false paging alarm.

When sub-grouping applies, a UE determines whether a received PEI comprises an indication of the sub-group to which the UE belongs and, when the received PEI comprises such an indication, the UE monitors a physical downlink control channel (PDCCH) in its paging occasion for paging. The UE does not monitor a PDCCH when a received PEI does not comprise information indicating the sub-group to which the UE belongs. The sub-grouping may be controlled by a core network node (e.g., an access and mobility function) that assigns the UE to a sub-group by sending the UE an identifier for that sub-group. The sub-grouping may be controlled by at least one access network node that assigns the UE to a sub-group based on an identifier of the UE. The sub-grouping may be cell-specific, meaning that different cells provided by the access network node may assign a UE to different respective sub-groups.

As a part of making the UEs more efficient when they comprise both an LR and an MR, 3GPP has recently agreed to use sub-grouping in respect of the LP-WUS signaling, with the sub-grouping for the LP-WUS signaling operating in a similar way as the subgrouping for the PEI. In this scheme, an LP-WUS sub-group may refer to a sub-group of UEs that is associated with a LP-WUS.

Recently, 3GPP has been considering implementing a wakeup scheme for a UE that is in a reduced power mode (e.g., a UE that is in an RRC Idle mode). This wakeup scheme involves the use of the LR architecture in the UE that is deployed independently of the UE's MR components.

The LR may be configured to monitor for a LP-WUS using less power than the MR of the UE uses for receiving a paging signal and/or a PEI.

The intention of 3GPP work items on the LR is to allow the MR of the UE to be in a sleep mode (or even powered off) for power saving, and to be activated only upon the reception of the low power wake-up signal from the network received at the LR.

Stated differently, by implementing a UE architecture comprising an LR and an MR, a network may trigger the UE to wake-up exactly when needed in an event-driven manner, by transmitting a low power wake-up signal, LP-WUS, to the UE that is monitored by the LR at the UE. When the UE receives the LP-WUS, the LR can trigger the wake-up of the MR transceiver and communication (using the MR) can start. Thus, as the LR wakes up the main radio when a LP-WUS is received, the main radio may be OFF or kept in a deep sleep mode. The assumption is that the low-power wake-up receiver can be operated in an always 'on' manner with very low power consumption. In fact, it is expected that it will consume significantly less power compared to the MR transceiver, by designing a simple (LP-WUS) signal and the use of specialized hardware for its monitoring, which is able to receive the LP-WUS.

In more detail, the wake-up signal may be sent to the UE by an access network node to indicate whether the UE should wake up and monitors the PDCCH in a corresponding DRX cycle or a paging occasion. If data arrives for a UE in or after the next DRX cycle, or next DRX cycle after UE wake-up delay, the network access node sends a wake-up signal to that UE. When the LR detects a wake-up signal, it wakes up the MR in the next possible DRX cycle and the MR monitors the PDCCH for paging. When the UE does not detect a wakeup signal, the MR stays asleep and the LR continues to monitor for a wake up signal

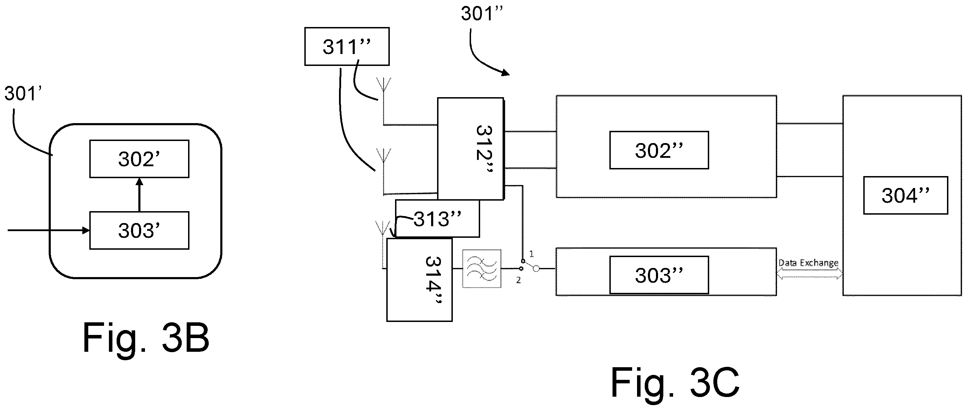

An example of how an LR may be used as a wakeup detector is illustrated with respect to Figures 3B and 3C.

Figure 3B illustrates an example configuration of a UE 301' that comprises both a Main Radio (MR) part 302' and an LR part 303'. It is understood that, in certain implementations, the MR and LR parts are just logic modules but may share the same hardware.

In the example of Figure 3B, the UE 301' is in a reduced power mode and so the MR part 302' may be configured to be in a deep sleep and/or off for at least part of the time. During this time, the LR part 303' monitors for an LP-WUS. In the example of Figure 3B, when the LR part 303' receives an LP-WUS that indicates that the UE is to wakeup, the LR part 303' issues a trigger to the MR part 302' that causes the MR part 302' to "wakeup" (e.g., to start receiving signaling and/or monitoring for signaling).

Figure 3C illustrates an example configuration of a UE 301" that comprises both an MR part 302" and an LR part 303". The MR part 302" and the LR part 303" are both connected to a baseband part 304" of the UE 301".

As shown in the example of Figure 3C, there is provided one or more antennas 311" that provides a signal to a frontend transceiver 312" for transceiving signals between the MR part 302" and an access network node (not shown). The signals received and/or transmitted via the frontend transceiver 312" may comprise signals having a radio access network frequency, such as a 5G (or 6G, etc.) radio access network frequency. There is also provided at least one antenna 313" and a matching receiver 314" that is configured to receive signals in a frequency band of the LP-WUS. There is further provided a switch 315" that is configured to cause an input of the LR part 303" to be either the LP-WUS input (e.g., when the switch 315" is located at position 2) or the frontend transceiver 312" (e.g., when the switch 315" is located at position 1).

In addition to operating as a wakeup receiver for the MR, the LR may also be used to perform one or more measurements on behalf of the MR. This may be, for example, for synchronization purposes.

As another example, it has been considered that serving cell evaluations (e.g., as part of the above-mentioned RRM measurements) could be offloaded from MR to LR to enable large power saving. In this latter example, the LR could perform the serving cell evaluation related measurements based on a new reference signal (e.g., a low power synchronization signal, LP-SS), or based on the existing SSB. The choice of which signal may be used by the LR for performing measurements may depend on at least one of the LR type (see below), a UE capability associated with the LR type, or a reference signal type. Currently, only serving cell evaluations are being considered to be offloaded to the LR as the coverage of the low power signals and the receiver is limited because, e.g., the LR has only 1 receiver and a relatively large noise figure. However, it is understood that this may change with developments to the LR architecture.

The LR may be implemented in any of a plurality of different ways. For example, an LR may comprise an envelope detector, and/or a sequence detector.

When the LR is an envelope detector, the LR may only be capable of detecting ON/OFF keying and it unable to perform sequence detection (e.g., to detect coherence). An LR receiver of this form can only receive an LP-WUS and an LP-SS.

When the LR is a sequence detector, the LR performs coherent detection. This type of LR consumes more power than the envelope detector due to the better accuracy of crystal oscillators (XO) used to drive phase locked loops of the sequence detector. This type of receiver may be able to receive synchronization signal blocks (SSB) in addition to LP-WUS.

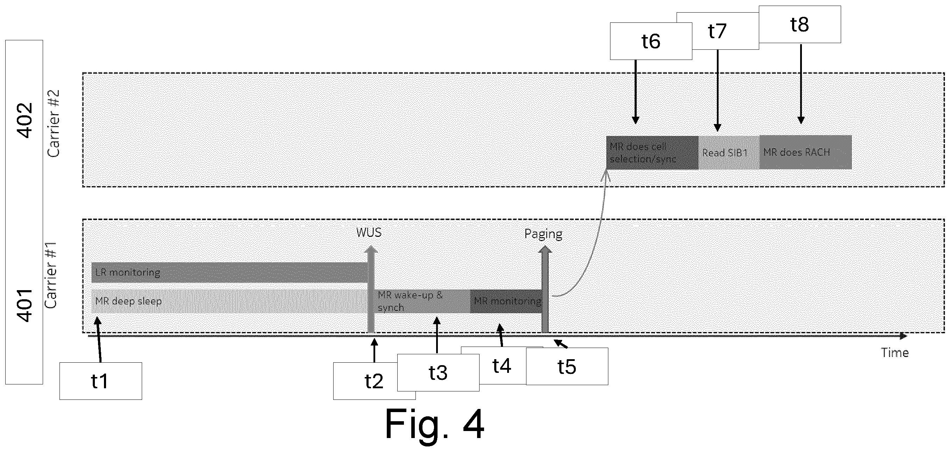

The example of Figure 4 illustrates a scenario in which a UE is configured to wake up the MR such that the MR uses a different frequency band to the frequency band via which the LR is configured to receive a LP-WUS or/and a paging message.

Figure 4 illustrates different operations that may be performed by an apparatus at different times (with increasing along the x axis being associated with an increase in time). Figure 4 illustrates a first frequency range 401 that is associated with a first carrier frequency, and a second frequency range 402 that is associated with a second carrier frequency.

During a first time t1, the MR is in a deep sleep while the LR is monitoring for a LP-WUS in the first frequency range.

At a second time t2, the LR detects a LP-WUS, and triggers the MR to wake up.

During a third time t3, the MR performs wakeup operations and synchronizes with the network for receiving signaling.

During a fourth time t4, the MR monitors for a paging signal in the first frequency range.

At a fifth time t5, the MR detects a paging signal in the first frequency range.

During a sixth time t6, the MR performs cell selection and synchronization in the second frequency range. Having performed this successfully, during a seventh time t7, the MR reads a system information block (e.g., SIB1) from the second frequency range, before performing a random access procedure at an eighth time, t8, to access the channel.

However, in the scenario of Figure 4, the coverage provided by the different carriers (e.g., by the different frequency ranges) may be different. This may result in a delay after paging, since the UE needs to select the other carrier. Further, it is not clear what the UE should do if the second carrier is not in a good state. For example, the second carrier may be congested and/or suffering from interference such that the paging response fails.

For clarity and brevity, the following will use the terms "frequency", "frequency band", "frequency carrier", "carrier", "band" and "cell" interchangeably to illustrate that the presently described principles may be applied in respect of any of these qualities.

The following aims to address at least one of the above-mentioned issues.

In more detail, the following illustrates an apparatus, such as a UE, that is configured to receive first signalling (e.g., an LP-WUS and/or a paging message) over at least one first frequency, where based on the first signalling, the UE may determine whether to perform at least a random access procedure using at least one second (different) frequency. The UE may perform the random access procedure in accordance with the determining.

In some examples, at least part of a paging procedure may be performed using the at least one second frequency. For example, a paging message may be received on the at least one second frequency, and/or a paging response message may be transmitted by the UE on the at least one second frequency. Whether at least part of the paging procedure may be performed using the at least one second frequency may be determined using the first signalling, using a preconfigured indication that indicates this, and/or using other signalling received from the network.

The UE may be configured to determine the at least one second frequency. For example, the at least one second frequency may be determined based on the first signalling received from a network, based on a preconfigured value and/or range of values, based on a specification (e.g., 3GPP), and/or based on any other method.

In examples illustrated in the following, a UE is configured with at least one indication that can be used to indicate to the UE which frequency band should be used by the UE for paging reception and/or for random access transmission. The at least one indication may be associated with, for example, a LP-WUS sub-group identifier.

In an example, the UE is assigned to two different sub-groups, and is therefore provided with a first sub-group identifier (e.g., of the first sub-group) and a second sub-group identifier (e.g., of the second sub-group). In the first sub-group, paging reception and the random access procedure is performed on the same frequency band that was used for reception of the LP-WUS. In the second sub-group, the sub-group configuration may comprise an indication that indicates the paging is received at the same frequency band that was used for reception of the LP-WUS, while the random access procedure is performed on another (different) frequency band.

Alternatively or additionally, the information about which frequency carrier to use for different operations may be comprised in the paging message. In this example, the UE receives an LP-WUS signal associated with a sub-group identifier on a first frequency, and also monitors the first frequency for a paging message. The UE reads the paging message, including information for a frequency indication and/or some other indication of a cell, frequency and/or frequency band that the UE is expected to perform a random access procedures on. This paging message may further comprise a UE identifier.

In another example, the UE is assigned two sub-groups. In a first of these two sub-groups, paging reception and random access is performed on the same frequency band that was used for reception of the LP-WUS. In a second of these two sub-groups, the sub-group configuration may comprise an indication indicating that the UE should attempt a random access procedure (e.g., RRC connection request, RRC resume, and/or paging response messages) on a second cell, frequency, and/or frequency band than was used for reception of the LP-WUS. This indication may further comprise information indicating that the paging message should be monitored for by the MR on the second cell, frequency, and/or frequency band.

In examples illustrated herein, the network is able to control on which band UE performs a random access procedure based on identifier of the sub-group associated with the LP-WUS transmitted to the UE, or/and information carried in the paging message. The network may perform this control based on a determination of a current quality associated with each of the different frequency bands (e.g., so that the MR operations, such as paging and random access, are performed on a "good" frequency band). A random access procedure may comprise signaling of at least one of a radio resource control (RRC) connection request, an RRC resume request, or an RRC paging response.

In an example, the UE may obtain the paging configuration or/and a carrier configuration from the sub-group configuration that is either configured by the network or predefined in standard specification.

In some other examples, measurement thresholds may be configured to determine whether a random access procedure (e.g., an RRC connection request, an RRC resume, and/or an RRC paging response process) can be initiated using at least one frequency over which the LP-WUS and/or paging message was received, or over another at least one frequency. Whether or not these measurement threshold(s) are met or exceeded may be evaluated using at least one measurement performed on the at least one first frequency and/or the at least one second frequency (as will be illustrated in the examples below). It is further understood that these measurements may be performed by at least one of the MR or the LR.

The evaluation as to whether the UE should perform the random access procedure in the UE's current serving cell and/or another cell may be performed after the UE has received an LP-WUS associated with a sub-group. The sub-group may be associated with a specific threshold configuration. For example, LR entry thresholds, LR exit threshold, MR entry thresholds, and/or MR exit thresholds may be configured for specific combinations of sub-groups and frequencies, where a threshold corresponds to a particular quality metric used for determination of using the corresponding frequency.

For example, the UE may evaluate a quality of the serving cell (e.g., reference signal receiver power, receive signal strength, etc.) based on measurements performed by at least one of the LR or MR. When the evaluated quality of the serving cell is above a threshold value, then the UE, when paged, initiates the random access procedure on the serving cell (or frequency carrier or frequency band). Analogously, when the evaluated quality of the serving cell is below the threshold value, the UE may reselect and/or otherwise direct itself to another cell (or frequency band or frequency carrier) to initiate the random access procedure.

In another example, the UE may evaluate a quality of the one or more first frequency on which the first signalling was received based on measurements performed by at least one of the LR or MR. When the evaluated quality of the one or more first frequency is above a threshold value, then the UE, when paged, initiates the random access procedure on the one or more first frequency. Analogously, when the evaluated quality of the one or more first frequency is below the threshold value, the UE may reselect and/or otherwise direct itself to another frequency (or at least one of a cell, frequency band, frequency carrier) to initiate the random access procedure.

The above mentioned evaluations may be performed at any of a plurality of different times. For example, the evaluation(s) may be performed before the first signalling is received, while the first signalling is being received, after the first signalling has been received, and/or after a paging message has been received at the UE.

To illustrate at least one of these options, in another example, the evaluation as to whether the UE should perform the random access procedure in the UE's current serving cell and/or another cell may be performed after the UE has been paged. In this example, the UE may evaluate one or more measurements performed in the first cell (and/or on a first frequency). The one or more measurements may be performed on some form of reference signal, such as, for example, a synchronization signal block (SSB). The one or more measurements may be used for determining a pathloss or/and an uplink transmission power. For example, whether a determined pathloss is below a configured corresponding threshold, or/and a determined uplink transmission power is below a configured corresponding threshold, the UE may perform a random access procedure on the cell and/or frequency via which the LP-WUS signal is received. Otherwise, the UE may select a different cell and/or frequency, based on indication of the different cell and/or frequency determined from the received LP-WUS or paging message, to perform the random access procedure.

It is further understood that the evaluation may be performed on the at least one second frequency that the random access procedure is intended to be performed on. This evaluation of the at least one second frequency may be performed in addition to or in the alternative to performing an evaluation on the at least one first frequency. When evaluations are performed on both the at least one first frequency and the at least one second frequency, the configured threshold value may relate to a difference between the two quality metrics. For example, the at least one second frequency may be used for the random access procedure only when the at least one second frequency is determined to have a quality metric that is better than the quality metric of the at least one first frequency by more than a configured threshold amount. Otherwise, the UE may continue to perform the random access procedure using the at least one first frequency.

In an example, the UE may evaluate a second frequency using at least one of the MR or the LR and use those measurements for evaluating whether a measured signal quality metric meets or exceeds a configured threshold value. Based on the threshold, the UE may monitor either the LP-WUS or the paging message. For instance, when the quality of the second frequency meets or exceeds a configured threshold value, the UE may be configured to monitor the LP-WUS on the first frequency and perform paging on the first frequency, while providing the paging response on the second frequency. When the evaluation result indicates that the second frequency is below the threshold value, the UE may monitor for paging using the first frequency and respond to paging on the first frequency. In this case, the UE may omit or ignore the LP-WUS reception.

In further example, the UE may perform the association of frequency and/or frequency band to a sub-group without the receipt of any specific network indication.

For example, when a UE receives, via a first frequency, an LP-WUS having a sub-group that is associated with a second frequency, the UE may determine to always perform a random access procedure using the second frequency. This determination by the UE may be performed based on a first performing a threshold evaluation. When the threshold evaluation passes, then the UE performs a random access procedure on the second frequency. The evaluation may be performed before or after the UE receives paging information. In one example the UE only performs the threshold evaluation when the paging information comprises a UE identifier for the UE. Stated differently, the evaluation may be performed only when the paging is targeted at the UE.

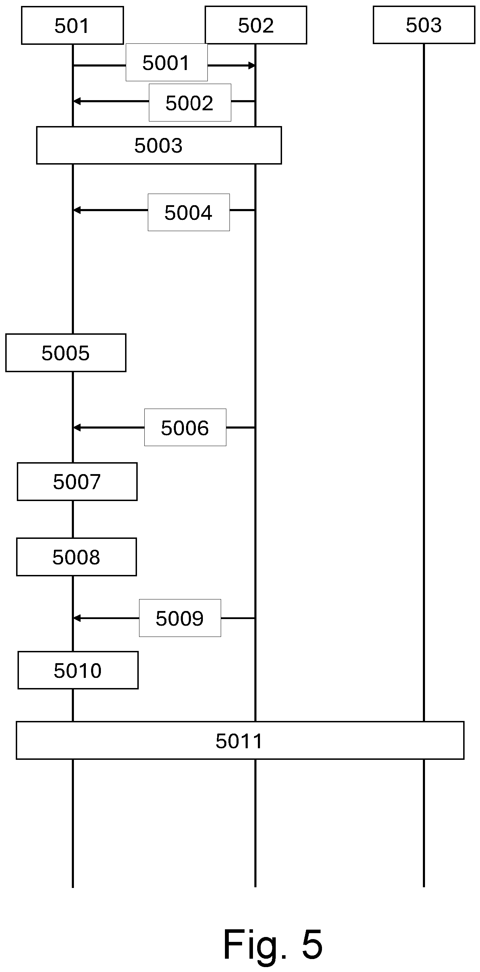

At least some of the above-mentioned principles are illustrated with respect to Figure 5.

Figure 5 illustrates signaling that may be performed by a UE 501, operating on a first frequency band 502 provided by an access network node, and a second frequency band 503 provided by the same or a different access network node.

During 5001, the UE 501 signals using the first frequency band 502. This signaling may comprise information indicating a capability of the UE for performing methods involving the LR. For example, this signaling may simply indicate that the UE comprises an LR part.

During 5002, the UE 501 is signaled via the first frequency band 502. This signaling may comprise an RRC release message. The signaling of 5002 may cause the UE 501 to be released from an RRC connected mode to an RRC idle mode.

In a first example, the signaling of 5002 may comprise a configuration for the UE to apply during the RRC idle mode. For example, this signaling may comprise an LP-WUS sub-group configuration that is associated with a redirection to another frequency. Alternatively or additionally, the signaling can be carried in an SIB transmitted during 5004 via the first frequency band 502.

During 5003, the UE is in an RRC idle mode and/or an RRC inactive mode.

At least one of the signaling of 5002 or 5004 may provide the UE with a sub-group configuration that indicates when the UE is to use a different frequency for one or more procedures to be performed using the MR.

For example, the sub-group configuration may be provided to the UE either in an RRC configuration message before the UE enters a reduced energy mode (e.g., such as an RRC idle mode or an RRC inactive mode), or when UE is released to the reduced energy mode, in accordance with 5002. In accordance with 5004, the sub-group configuration may be provided to the UE via an SIB message.

The following illustrates an example sub-group configuration.

The sub-group configuration may comprise at least one of:
∘ A sub-group identifier: In an example the sub-group identifier may be associated with at least one of an MR frequency or an LR frequency; and
∘ Information indicating which frequency to use for monitoring for paging.

The information indicating which frequency to use for monitoring for paging may be provided in at least one of a plurality of different forms. For example, the information may comprise at least one of:
∘ A flag indicating that the UE should read a paging configuration for a frequency configuration upon determining that the UE identifier indicated by the LP-WUS indicates that the LP-WUS is for the UE; or
∘ Carrier configuration, where the carrier configuration may comprise at least one of:
   ▪ An MR carrier configuration indicating on which band the MR should:
      ∘ respond to the paging
      ∘ receive the paging after LP-WUS signal has been received
   ▪ An LR carrier configuration, where the LR configuration indicates on which band the LR should receive LP-WUS and band where MR responds to paging. In this case, the MR receives the paging at the same band as LP-WUS is received.

The carrier configuration may additionally comprise an extra flag indicating that the paging reception should be on a different band than the LR band.

During 5005, the UE 501 is monitoring the first frequency band 502 for the LP-WUS and the UE 501 may also perform measurements on the serving cell and possibly the second frequency band 503.

During 5006, the UE 501 receives signaling via the first frequency band 502. This signaling may comprise an LP-WUS that is directed to a sub-group having a redirection association.

During 5007, the UE 501 performs a measurement evaluation based on a threshold. This may be as described above, where the UE 501 determines at least one quality metric associated with the first frequency band and/or the second frequency band. For example, the threshold may be configured such that, when tthe received LP-WUS is associated with a sub-group indicating that the MR should perform at least part of a paging operation and/or at least part of a random access procedure over the second frequency band, the UE may override this indication when the signal quality of the second frequency band is not high enough (e.g., below a threshold level associated with that signal quality of the second frequency band). This may help to prevent disadvantageous switching to the second frequency band.

During 5008, assuming that it has been determined during 5007 that an LP-WUS was received, the UE wakes up the MR to monitor for a paging message.

During 5009, the UE 501 receives signaling via the first frequency band 502. This signaling may comprise a paging message that comprises an identifier of the UE 501, and/or some other information that may be used by the UE 501 to determine that the signaling of 5009 is for the UE 501. The signaling of 5009 may comprise information that indicates the second frequency band 503.

During 5010, the UE 501 determines that the UE should respond to the paging on the second frequency band. This may be determined based on the information comprised in the signaling of 5009, including the information identifying the UE and an indication of the second frequency band 503.

During 5011, the UE 501 performs (re)-selection on the second frequency band (e.g., in accordance with the configuration). This may be performed using the RRC setup procedure and/or the RRC resume procedure.

The network configuration of this feature may depend whether the UE is able to perform either paging or a random access procedure via a different frequency band than the frequency band used by the UE to receive the LP-WUS signal. The UE may signal its capability for performing this to the network (e.g., to an access network node) as part of its UE capability information. This may be provided to the network when the UE registers with the network and/or when the UE connects to the network. The network may decide whether to configure UE with LP-WUS reception on a different band than the paging or paging response based on the capability information.

The UE of Figure 5 may operate as follows.

First, the UE may obtain the sub-group configuration, where the sub-group configuration may be as described above.

This sub-group configuration may be used by the UE to perform LP-WUS reception with a sub-group-based redirection. The UE may additionally performing radio resource management measurements on a serving cell, and potentially on a second frequency, using at least one of the LR and the MR.

An access network node may subsequently transmit an LP-WUS signal associated with a sub-group that is associated with a second frequency. This results in the UE performing LP-WUS reception on the first frequency, and possibly performing a paging response on the second frequency. As mentioned above, the UE may also perform a threshold evaluation at this point.

In one example the UE receives a sub-group-based LP-WUS on the first frequency and obtains frequency information for responding to paging information and/or for performing a random access procedure from paging information.

Based on the sub-group information and possible paging information, the UE may determine which frequency (e.g., frequency band, frequency carrier, etc.) to use to respond to the paging message. If so configured, the UE may also move to a different frequency to both receive the paging message and to respond to the paging message.

As mentioned above, in some scenarios the UE may perform a threshold evaluation after the UE receives paging message. In other scenarios, the UE may perform a threshold evaluation after or before the UE initiates monitoring for an LP-WUS.

In a specific example, the UE store an association that associates an LR frequency band support (e.g., at least one of the LP-WUS and/or the WUR) with a specific frequency configuration and a specific sub-group configuration to resolve whether the paging and/or a random access channel response should always be performed on the second frequency. For example, when an LR frequency support does not match the MR serving cell frequency for a specific sub-group. This may be useful, for example, when the UE is configured with LP-WUS, without a specific indication from the network. The UE may store the sub-group information, and, when LP-WUS is received via a first frequency, the UE may further perform a paging procedure and/or a Random access procedure on the other frequency.

In a specific example, when the LP-WUS message comprises the above-mentioned sub-group indication, the UE may be configured to always perform the random access procedure on a different frequency to the frequency used to receive the LP-WUS based on the previously stored association.

In an example, when a specific sub-group is indicated and the sub-group in the LP-WUS message, UE performs threshold evaluation. The threshold may be defined by UE implementation. The UE may define a static threshold between MR or LR entry/exit thresholds. Alternatively, the UE may define at least one of an MR threshold or an LR threshold with respect to an offset value, where the offset value is based on an accuracy of the LR (e.g. to consider LR accuracy). Alternatively, the UE may use LR entry and/or exit thresholds and/or MR entry and/or exit thresholds directly. In all of these three examples, when a measured quality value is above a set threshold value, or in between the entry and exit thresholds for any of the MR and the LR, the UE may perform a paging process and/or a random access process on the second frequency.

In an example, the UE may perform a threshold evaluation only when a specific sub-group is indicated by the LP-WUS and the UE identifier extracted from the paging message matches an identifier of the UE, where the paging message is obtained vis the same frequency band as the LP-WUS.

There may also be provided at least one access network node configured to interact with a UE as described herein.

For example, there may be provided an access network node that is configured to transmit an LP-WUS on a first frequency and expects connection establishment to be performed on a second frequency.

For example, the access network node may transmit an LP-WUS on a first frequency and, after assuming a time taken for the UE to perform a wakeup procedure after receiving the LP-WUS, transmit at least one paging message on a second frequency. The transmittal of the at least one paging message on the second frequency may initiate the UE connection procedure on the second frequency.

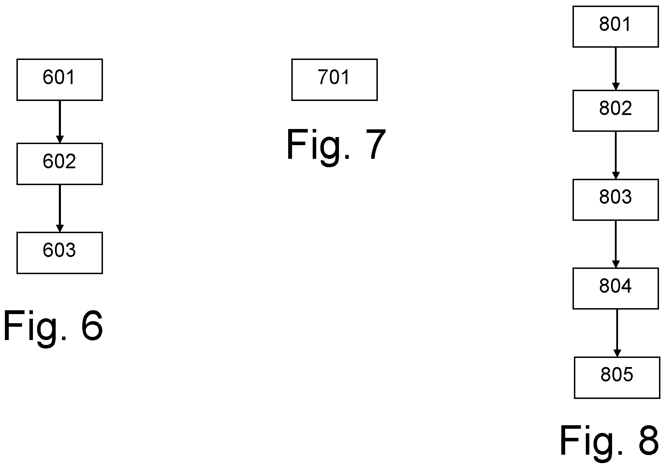

Figures 6 to 8 illustrate example methods that may be performed by apparatus described herein.

Figure 6 illustrates an example method that may be performed by an apparatus. The apparatus may be an apparatus as described above in connection with any of Figures 3A to 3C, such as a UE.

During 601, the apparatus receives first signalling on at least one first frequency. The first signalling may comprise, for example, a wake-up signal (e.g., a LP-WUS), a paging message, or the like.

During 602, the apparatus determines, based on the first signalling, whether to perform a random access procedure on at least one second frequency, wherein the at least one second frequency is different to the at least one first frequency.

During 603, the apparatus performs the random access procedure in accordance with said determining.

The first signalling may indicate an identifier that is associated with whether the apparatus should perform the random access procedure on the at least one second frequency. For example, the first signalling may be an LP-WUS that comprises the identifier and/or from which the identifier may be identified (e.g., when at least part of the LP-WUS is scrambled by the identifier.

For example, the first signalling may comprise an LP-WUS associated with a sub-group of UEs, and a configuration of the sub-group comprises at least one of an indication indicating whether a paging message is on the at least one second frequency, an indication indicating whether the random access procedure is on the at least one second frequency, or an indication of the at least one second frequency. The apparatus may obtain the configuration of the sub-group.

An LP-WUS may be associated with a sub-group of UEs if an identifier of the sub-group is sent on the LP-WUS, the LP-WUS indicates the identifier of the sub-group, the LP-WUS is scrambled by the identifier of the sub-group, or the configuration of the sub-group comprises an identifier of the LP-WUS.

The determining of 602 may comprise determining the sub-group associated with the received LP-WUS, determining, based on the configuration of the sub-group, whether to receive the paging message on the at least one second frequency, and receiving the paging message in accordance with said determining.

The first signaling may comprise a paging message.

The paging message may comprise an indication of the at least one second frequency.

The apparatus may determine, based on the first signalling, whether to send a paging response on the at least one second frequency. The apparatus may send a paging response on the at least one second frequency in accordance with said determining whether to send a paging response on the at least one second frequency.

The at least one first frequency may comprise at least one of a carrier frequency, a frequency band, or a cell bandwidth.

The at least one second frequency may comprise at least one of a second carrier frequency, a at least one second frequency band, or a second cell bandwidth.

As mentioned above, the apparatus may further use at least one threshold value and at least one measurement performed on a frequency to determine whether to perform a random access procedure on the at least one second frequency.

For example, apparatus may obtain a configuration of at least one threshold to determine whether to perform the random access procedure on the at least one second frequency, wherein the determining, based on the first signalling whether to perform the random access procedure using the at least one second frequency, may comprise: performing at least one measurement to obtain at least one of a first quality metric associated with the at least one first frequency, or a second quality metric associated with the at least one second frequency; and selecting either the at least one first frequency or the at least one second frequency based on the at least one measurement and the at least one threshold.

The at least one threshold may correspond to or otherwise be associated with at least one of a transmission power, a reference signal receive quality, a reference signal receive power, or a received signal strength indicator.

Figure 7 illustrates a method that may be performed by a network apparatus, such as an apparatus described above in connection with Figure 2. For example, the network apparatus of Figure 7 may comprise an access network node, such as a gNB. The example of Figure 7 may be an interacting apparatus to any of the examples of Figures 6 and 8.

During 701, the apparatus provides a user equipment with first signalling over at least one first frequency, wherein the first signalling comprises at least one of a low power wake-up signal (LP-WUS) or a paging message, wherein the LP-WUS is associated with a sub-group of UEs, and a configuration of the sub-group comprises at least one of an indication indicating whether a paging message is on at least one second frequency, an indication indicating whether a random access procedure is on at least one second frequency, or an indication of the at least one second frequency.

More generally, it may be said that a network apparatus provides a user equipment with first signalling over at least one first frequency, wherein based on the first signalling, the user equipment can determine whether to perform a random access procedure using at least one second frequency that is different to the at least one first frequency.

The LP-WUS may be associated with the sub-group if an identifier of the sub-group is sent on the LP-WUS, the LP-WUS indicates the identifier of the sub-group, the LP-WUS is scrambled by the identifier of the sub-group, or the configuration of the sub-group comprises an identifier of the LP-WUS.

The apparatus may provide the user equipment with the configuration of the sub-group.

The paging message may comprise an indication of the at least one second frequency.

In an example, in which the first signalling does not comprise the paging message, the apparatus may transmit the paging message on the at least one second frequency.

The apparatus may receive a paging response message on either the at least one first frequency or the at least one second frequency.

The at least one first frequency may comprise at least one of a carrier frequency, a frequency band, or a cell bandwidth.

The at least one second frequency may comprise at least one of a carrier frequency, a frequency band, or a cell bandwidth.

The apparatus may provide a configuration of at least one threshold to the user equipment for the user equipment to determine whether to perform the random access procedure on the at least one second frequency.

The at least one threshold may be associated with at least one of a transmission power, a reference signal receive power, or a received signal strength indicator.

The apparatus may provide the user equipment with an association between the first signalling and the at least one second frequency, and/or providing the user equipment with the at least one second frequency.

The following may optionally apply in respect of any (e.g., one or more, including all) of the above-mentioned examples of Figures 6 and 7.

The first signalling may indicate a first identifier that is reserved for indicating whether the user equipment should perform the random access procedure using the at least one second frequency.

The first signalling may comprise at least one of a low power wake-up signal or a paging message.

The first signalling may comprise an indication of the at least one second frequency.

Figure 8 further illustrates an example method that may be performed by an apparatus. The example of Figure 8 may be performed by an apparatus as described above in connection with any of Figures 3A to 3C, such as a user equipment. It is understood that, like the example of Figure 6, the example of Figure 8 may be an interacting apparatus to the example of Figure 7.

During 801, the apparatus derives a threshold configuration, wherein the threshold configuration comprises at least one respective threshold for at least one of at least one first frequency or at least one second frequency, wherein the at least one second frequency is different to the at least one first frequency.

During 802, the apparatus receives first signalling on the at least one first frequency wherein the first signalling indicates whether a random access procedure is to be performed on the at least one second frequency.

During 803, the apparatus determines the at least one second frequency. The at least one second frequency may, as in the case of the example of Figure 6, be determined using at least one of a frequency configuration, a carrier configuration, a paging message (e.g., by comprising an identifier of the at least one second frequency, and/or by comprising a flag that indicates where to identify the at least one second frequency), LP-WUS (e.g., by comprising an identifier of the at least one second frequency, and/or by comprising a flag that indicates where to identify the at least one second frequency), and/or via a preconfigured association between an identifier indicated by the first signalling and the at least one second frequency.

During 804, the apparatus determines, based on the first signalling and the threshold configuration, whether to perform a random access procedure on the at least one second frequency.

During 805, the apparatus performs the random access procedure in accordance with said determining.

Any of the optional features described above with respect to Figure 6 may be applied in respect of the apparatus of Figure 8.

In examples, the apparatus may derive at least one threshold from the threshold configuration. The at least one threshold may comprise a configured LR monitoring threshold. The at least one threshold may comprise a threshold formed based on applying an offset value to a configured LR monitoring threshold with offset. The at least one threshold may be a value stored in a memory of the apparatus.

The apparatus may be further configured to adapt at least one of the thresholds defined in the threshold configuration based on an accuracy of the LR to determine a measurement threshold where the random access is always performed using a best frequency. This may mean that the apparatus may overwrite any network configured threshold values where the LR is more accurate than that assumed by the network or where the LR is less accurate than that assumed by the network.

The first signaling may comprise a paging message.

The paging message may comprise an indication of the at least one second frequency.

The apparatus may determine, based on the first signalling, whether to send a paging response on the at least one second frequency. The apparatus may send a paging response on the at least one second frequency in accordance with said determining whether to send a paging response on the at least one second frequency.

The at least one first frequency may comprise at least one of a carrier frequency, a frequency band, or a cell bandwidth.

The at least one second frequency may comprise at least one of a second carrier frequency, a at least one second frequency band, or a second cell bandwidth.

The determining, based on the first signalling and the threshold configuration, whether to perform a random access procedure using the at least one second frequency, may comprise: obtaining a first threshold value from the threshold configuration; performing at least one measurement to obtain a first quality metric associated with the at least one first frequency; and; selecting either the at least one first frequency or the at least one second frequency based on whether the first quality metric meets or exceeds the first threshold value.

The determining, based on the first signalling and the threshold configuration, whether to perform a random access procedure using the at least one second frequency, may comprise: obtaining a second threshold value from the threshold configuration; performing at least one measurement to obtain a second quality metric associated with the at least one second frequency; and selecting either the at least one first frequency or the at least one second frequency based on whether the second quality metric meets or exceeds the second frequency threshold value.

The first threshold value may comprise at least one of a transmission power, a reference signal receive power, a reference signal receive quality, or a received signal strength indicator.

The first threshold value may comprise at least one of a threshold for using a first receiver, a threshold for not using the first receiver, a threshold for using a second receiver, a threshold for not using the second receiver, a value between the threshold for using the first receiver and the threshold for using the second receiver, or a value between the threshold for not using the second receiver and the threshold for not using the second receiver.

The performing the selecting either the at least one first frequency or the at least one second frequency may be based on whether the obtained quality metric meets or exceeds the first threshold value only when both the first signalling indicates the first identifier and a received paging message comprises a user equipment identifier associated with the apparatus.

The selecting may be is performed before a paging message that identifies the apparatus is received on the least one first frequency, or the selecting may be performed after a paging message that identifies the apparatus is received.

The first signalling may comprise at least one of a low power wake-up signal or a paging message.

In all of the above examples, the first signalling may comprise an indication of the at least one second frequency, although it is understood that this may be provided through other signalling and/or be otherwise configured at the UE.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

## Claims

1. An apparatus comprising means for:
deriving a threshold configuration, wherein the threshold configuration comprises at least one respective threshold for at least one of at least one first frequency or at least one second frequency, wherein the at least one second frequency is different to the at least one first frequency;
receiving first signalling on the at least one first frequency wherein the first signalling indicates whether a random access procedure is to be performed on the at least one second frequency;
determining the at least one second frequency;
determining, based on the first signalling and the threshold configuration, whether to perform a random access procedure on the at least one second frequency; and
performing the random access procedure in accordance with said determining.

2. An apparatus as claimed in claim 1, wherein the first signaling comprises a low power wake-up signal (LP-WUS) associated with a sub-group of user equipments, and a configuration of the sub-group comprises at least one of an indication indicating whether a paging message is on the different frequency, an indication indicating whether the random access procedure is on the different frequency, or an indication of the different frequency, and wherein the apparatus comprises means for:
obtaining the configuration of the sub-group.

3. An apparatus as claimed in claim 2, wherein the means for determining comprises means for:
determining the sub-group associated with the received LP-WUS;
determining, based on the configuration of the sub-group, whether to receive the paging message on the at least one second frequency; and
receiving the paging message in accordance with said determining.

4. An apparatus as claimed in claim 1 or 2, wherein the first signaling comprises a paging message.

5. An apparatus as claimed in claim 3 or 4, wherein the paging message comprises an indication of the at least one second frequency.

6. An apparatus as claimed in any preceding claim, further comprising means for:
determining, based on the first signalling, whether to send a paging response on the at least one second frequency; and
sending a paging response on the at least one second frequency in accordance with said determining whether to send a paging response on the at least one second frequency.

7. An apparatus as claimed in any preceding claim, wherein the at least one first frequency comprises at least one of a carrier frequency, a frequency band, or a cell bandwidth.

8. An apparatus as claimed in any preceding claim, wherein the at least one second frequency comprises at least one of a second carrier frequency, a at least one second frequency band, or a second cell bandwidth.

9. An apparatus as claimed in any preceding claim, wherein the means for determining, based on the first signalling and the threshold configuration, whether to perform a random access procedure using the at least one second frequency, further comprises means for:
obtaining a first threshold value from the threshold configuration;
performing at least one measurement to obtain a first quality metric associated with the at least one first frequency; and
selecting either the at least one first frequency or the at least one second frequency based on whether the first quality metric meets or exceeds the first threshold value.

10. An apparatus as claimed in any of claims 1 to 8, wherein the means for determining, based on the first signalling and the threshold configuration, whether to perform a random access procedure using the at least one second frequency, further comprises means for:
obtaining a second threshold value from the threshold configuration;
performing at least one measurement to obtain a second quality metric associated with the at least one second frequency; and
selecting either the at least one first frequency or the at least one second frequency based on whether the second quality metric meets or exceeds the second frequency threshold value.

11. An apparatus as claimed in any of claims 9 to 10, wherein the first threshold value comprises at least one of a transmission power, a reference signal receive power, or a received signal strength indicator.

12. An apparatus as claimed in any of claims 9 to 11, wherein the first threshold value comprises at least one of a threshold for using a first receiver, a threshold for not using the first receiver, a threshold for using a second receiver, a threshold for not using the second receiver, a value between the threshold for using the first receiver and the threshold for using the second receiver, or a value between the threshold for not using the second receiver and the threshold for not using the second receiver.

13. An apparatus as claimed in any of claims 9 to 12 further comprising means for performing the selecting either the at least one first frequency or the at least one second frequency based on whether the obtained quality metric meets or exceeds the first threshold value only when both the first signalling indicates the first identifier and a received paging message comprises a user equipment identifier associated with the apparatus.

14. An apparatus as claimed in any of claims 9 to 13, wherein the selecting is performed before a paging message that identifies the apparatus is received on the least one first frequency, or wherein the selecting is performed after a paging message that identifies the apparatus is received.

15. An apparatus as claimed in any preceding claim, wherein the first signalling comprises at least one of a low power wake-up signal or a paging message.
